# EUROPÄISCHE PATENTSCHRIFT

(11) **EP 0 217 208 B1**
(45) Veröffentlichungstag und Bekanntmachung des Hinweises auf die Patenterteilung: **15.06.1994**
(21) Anmeldenummer: 86112693.6
(22) Anmeldetag: 13.09.1986
(51) Int. Cl.: F27D 1/00, F27B 14/06, F27B 14/10

(54) **Boden eines elektrisch beheizten Schmelzofens, insbesondere eines Gleichstromofens**
Bottom of an electric smelt furnace, in particular of a direct current one
Fond d'un four de fusion électrique, en particulier à courant continu

(30) Priorität: 28.09.1985 DE 3534750
(43) Veröffentlichungstag der Anmeldung: 08.04.1987
(73) Patentinhaber: MANNESMANN Aktiengesellschaft, 40027 Düsseldorf (DE)
(72) Erfinder: Radke, Dietrich, Dr., D-4030 Ratingen (DE); Meger, Peter, D-4156 Willich 4 (DE); Zörcher, Heinz, D-4630 Bochum 1 (DE)
(74) Vertreter: Meissner, Peter E., Dipl.-Ing.

(56) Entgegenhaltungen:
- EP-A- 0 151 415
- DE-A- 3 413 745
- GB-A- 2 142 810
- ASM Metals Handbook Casting, Vol. 15, 9. Edition, S. 367,368

## Beschreibung

Die Erfindung bezieht sich auf einen elektrisch beheizten Schmelzofen, insbesondere einen Gleichstromofen und vorzugsweise einen Gleichstromlichtbogenofen, der mit als Elektrode dienenden Schichten aus elektrisch leitendem Material versehen ist, nach dem Oberbegriff des Anspruchs 1.

Bei den bekannten Gleichstromöfen besteht allgemein das Problem, daß die Haltbarkeit des Bodens in dem Bereich, in dem als Elektroden Schichten aus elektrisch leitendem Material angeordnet sind, unzureichend ist. Es sind verschiedene Boden-Ausbildungen solcher Gleichstromöfen bekanntgeworden, bei denen sich in der Zustellung aus feuerfestem Material als Stromleiter Platten oder Stäbe aus Metall oder Graphit befinden, die jedoch von der Metallschmelze aufgelöst bzw. ausgewaschen werden können und dabei sogar zu Ofendurchbrüchen führen können.

Eine gewisse elektrische Leitfähigkeit haben durch ihren Graphitanteil Kohlenstoff-Magnesitsteine, die aus diesem Grunde in der EP-A-0 151 415 für den Einsatz als leitendes Material für eine Bodenelektrode vorgeschlagen worden sind. Da jedoch die elektrische Leitfähigkeit solcher Steine zu gering ist, müssen zusätzliche Leiter aus Graphit eingesetzt werden, um einen ausreichenden Stromdurchgang zu gewährleisten. Diese zusätzlichen Leiter haben bei Kontakt mit dem Metallbad wieder einen hohen Verschleiß. Sie können bei den in einam solchen Boden auftretenden hohen thermischen Spannungen auch leicht zerdrückt werden, so daß an den Bruchstellen der Stromfluß unterbrochen wird. Außerdem kommt es bei bestimmten Arbeitsweisen des Gleichstromofens häufig vor, daß die Kohlenstoff-Magnesitsteine dadurch stark verschleißen, daß ihre Graphitanteile abgebaut werden. Die Verwendung von Kohlenstoff-Magnesitsteinen hat außerdem den Nachteil, daß durch ihre gute thermische Leitfähigkeit größere Wärmeverluste beim Ofenbetrieb auftreten.

Aus "ASM Metal Handbooks, Casting, Vol. 15 (9. Edition), Seiten 367 bis 368, ist es bekannt, Feuerfeststeine für Gleichstromschmelzöfen mit Teer oder Graphit zu imprägnieren. Dazu werden die Steine in ein Bad getaucht oder mit der Imprägnierflüssigkeit angestrichen. Weder von der Aufbringungsart noch von der Schichtdicke der Teer- bzw. Graphitmaterialien besteht hierbei die Möglichkeit, diese Schichten zur Leitung von elektrischem Strom einzusetzen. Die Imprägnierungen dienen zum Schutz der Steine gegen aggressive Medien außerhalb des Ofens vor der Zustellung oder auch nach Einbau in den Ofen während des Schmelzprozesses.

Der Erfindung liegt die Aufgabe zugrunde, den Boden eines Gleichstromofens der eingangs genannten Art so zu gestalten, daß die Haltbarkeit des Bodens unter Sicherstellung eines ausreichenden Stromdurchgangs verbessert wird.

Die Lösung der Aufgabe besteht in den Merkmalen des kennzeichnenden Teils des Anspruchs 1. Bevorzugte Ausführungsformen sind in den abhängigen Ansprüchen 2-11 offenbart.

Die Erfindung bringt in erster Linie den Vorteil, daß das hochschmelzende nichtmetallische Material mit dem feuerfesten Material bereits vor der Formgebung des Bodens verbunden werden kann, und zwar unabhängig davon, ob der Boden des Gleichstromofens aus Steinen zusammengesetzt ist oder durch Einbringen einer Stampfmasse hergestellt wird. Die Schichten des nichtmetallischen Materials werden so dünn - vorzugsweise unter 2 mm - gehalten, daß ein Auswaschen durch die Schmelze des Ofens mit Sicherheit verhindert wird.

Als elektrisch leitendes, hochschmelzendes nichtmetallisches Material kommen alle geeigneten Verbindungen in Betracht, die diese Eigenschaften aufweisen. Neben den bevorzugten kohlenstoffhaltigen Materialien können auch Boride, Silizide und Nitride verwendet werden. Von den kohlenstoffhaltigen Materialien ist insbesondere Graphit geeignet, der vorzugsweise auf die Oberfläche von Steinen aus feuerfestem Material, falls erforderlich unter Zwischenschaltung einer inerten Zwischenschicht aufgebracht wird.

Besonders vorteilhaft ist die Verwendung von Metallkarbiden, wie Chrom-, Tantal-, Molybdän-, Wolfram-, Vanadin- und insbesondere Titankarbiden. Diese können, wie im übrigen auch die Boride, Silizide und Nitride als extrem dünne Schicht auf die Partikel des feuerfesten Materials vor der Formgebung als Zustellung aufgebracht werden. Die Überzüge auf den Partikeln bilden dann ein elektrisch leitendes Netzwerk, das vor jedem "voreilenden" Verschleiß geschützt ist. Daß auf diese Weise hergestellte Boden-Material kann zu geformten Steinen weiter verarbeitet oder auch als Stampfmasse in den Ofen eingebracht werden. Das Titankarbid kann ebenso wie Graphit und die anderen geeigneten Materialien selbstverständlich auch auf die Oberflächen der Steine aus feuerfestem Material, aus denen der Boden zusammengesetzt wird, aufgebracht werden. Dabei kann es erforderlich sein, zwischen das feuerfeste Material und die Schichten eine inerte Zwischenschicht einzuschalten, wenn eine Reaktion zwischen dem Schicht- und dem feuerfesten Material unter bestimmten Betriebsbedingungen zu erwarten ist. Das gilt insbesondere für hochkohlenstoffhaltige feuerfeste Materialien. Als inerte Zwischenschicht kommt in erster Linie Aluminiumoxid in Betracht.

Außer auf den Oberflächen der feuerfesten Steine können die Schichten auch ausschließlich oder zusätzlich in den Steinen in der Stromdurchgangsrichtung angeordnet sein, z.B. als Lamellen oder Gitterwerk. Die Steine werden dann in entsprechender Weise gefertigt. Wesentlich ist für alle Ausführungsformen des Bodens nach der Erfindung, daß Anzahl und Stärke der Schichten so gewählt wird, daß der erforderliche Stromdurchgang erzielt wird. Das gilt selbstverständlich auch im Falle der beschichteten Partikel des feuerfesten Ausgangsmaterials. Bei der Verwendung von Steinen ergeben sich für die Anordnung der Schichten in diesen bzw. auf deren Oberflächen eine Reihe von Variationsmöglichkeiten. Es kann beispielsweise auch ausreichen, wenn nur ein Teil, z.B. die Hälfte der Steine mit den elektrisch leitenden Schichten versehen sind.

Die Erfindung ist anwendbar bei allen elektrisch beheizbaren Öfen, deren Boden als Elektrode arbeitet, wobei insbesondere Gleichstromöfen und bevorzugt Gleichstromlichtbogenöfen in Betracht kommen, deren Boden in der Regel als Anode fungiert. Besondere Vorteile bringt die Erfindung bei solchen Öfen in der Verwendung als sog. Verschleißfutter, also dem mit der Schmelze in Berührung befindlichen Teil der feuerfesten Zustellung.

Die untere Grenze der Schichtdicke des elektrisch leitenden Materials liegt im Falle des Auf- oder Einbringens der Schicht bei der Verwendung von Steinen bei etwa 2 »m, im Falle der Partikel-Beschichtung etwa bei 0,001 »m. Die Schichten werden mit Vorteil so dünn wie möglich gehalten.

Die Erfindung wird nachfolgend anhand mehrerer Ausführungsbeispiele, die in der Zeichnung schematisch dargestellt sind, näher erläutert.

Es zeigt:
- Fig. 1: den Bodenbereich eines Gleichstromlichtbogenofens im senkrechten Schnitt,
- Fig. 2 und 3: je einen verschieden beschichteten Stein der feuerfesten Zustellung eines solchen Ofens im Schnitt in der Stromdurchgangsrichtung,
- Fig. 4: einen Teil eines feuerfesten Steins in einer anderen Ausführungsform im Schnitt quer zur Stromdurchgangsrichtung und
- Fig. 5: einen stark vergrößerten Ausschnitt eines aus Stampfmasse hergestellten Bodens im Schnitt.

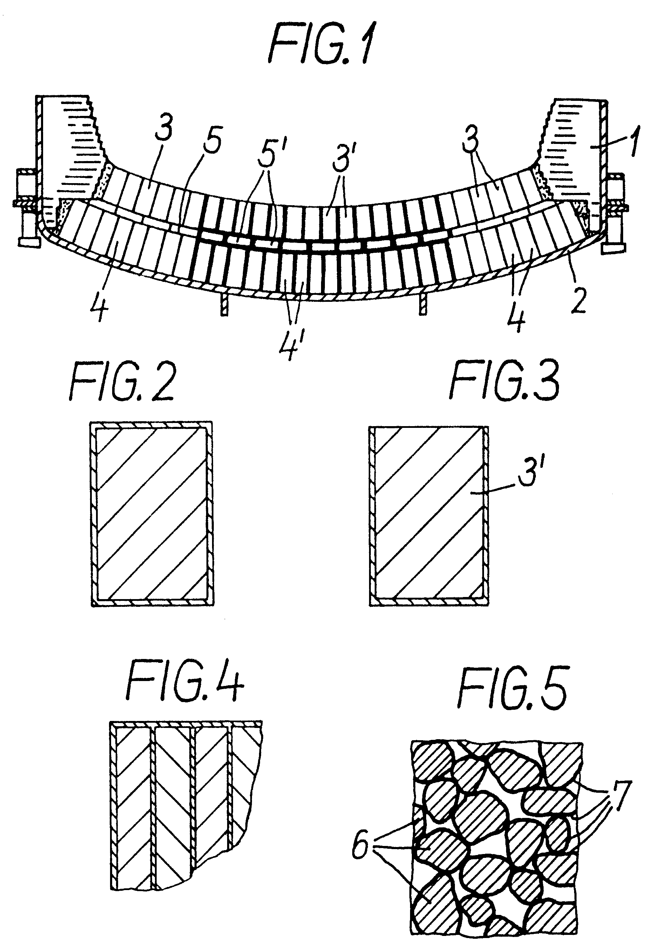

Wie Fig. 1 zeigt, erstreckt sich zwischen dem zylindrischen Seitenwandbereich 1 eines Gleichstromlichtbogenofens das nach unten gewölbte Bodenblech 2, das an der Innenseite mit Steinen aus feuerfestem Material als Futter zugestellt ist. Die Zustellung weist eine innere Schicht von nebeneinander angeordneten aneinander anschließenden Steinen 3 auf, die das sog. Verschleißfutter bilden. An das Bodenblech grenzt eine weitere Schicht von hochwertigen Schamotte-Steinen 4, die in gleicher Weise nebeneinander angeordnet sind und lediglich der Wärmedämmung dienen, also mit der Schmelze nicht in Berührung kommen wie das Verschleißfutter. Zwischen dem Verschleißfutter und dem Dauerfutter ist eine wesentlich dünnere Schicht aus dementsprechend flachen Steinen 5 angeordnet, die aus dem gleichen Material wie das Verschleißfutter besteht und eine zwischengeschaltete Sicherheitszone darstellt. Die Steine des Verschleißfutters und der Sicherheitszone bestehen aus Magnesit.

Im mittleren Bereich des Bodens sind Steine aus feuerfestem Material eingesetzt, die an ihren sämtlichen Oberflächen mit Graphit beschichtet sind. Der Graphit ist unter Verwendung eines geeigneten Bindemittels wie Pechkoks oder Petrolkoks auf die Steine 3', 4' und 5', also des Verschleißfutters, des Dauerfutters und der Zwischenschicht in den betreffenden Bereichen vor der Zustellung des Bodens aufgebracht worden. Die Schichtdicke beträgt jeweils 1,5 mm. Die Steine 3' und 4' weisen die Form einer quadratischen Säule auf und sich hochkant in den Boden eingesetzt. Die Steine 5' der Sicherheitszone erstrecken sich im wesentlichen parallel zum Bodenblech 2. Für die Auswahl des feuerfesten Materials im zentralen Bereich der Bodenelektrode gilt das gleiche wie für den angrenzenden Randbereich des Bodens.

Allseitig beschichtete Steine des Verschleiß- und Dauerfutterbereichs, wie sie am Ausführungsbeispiel nach Fig. 1 eingesetzt sind, zeigt Fig. 2. Durch die Beschichtung auf der Ober- und Unterseite der Steine wird auch in der Bereichen, in denen die Steine in der Stromdurchgangsrichtung, aneinander angrenzen, also im wesentlichen quer zur Ersteckung des Bodens, gute Kontakte für den Stromdurchgang erzielt. An der der Schmelze zugewandten Oberseite der Steine 3' des Verschleißfutters kann die Beschichtung eingespart werden, wie in Fig. 3 dargestellt, falls dadurch Einsparungen erzielt werden.

Die Anordnung elektrisch leitender Schichten in Lamellenform in einem Stein aus feuerfestem Material zeigt Fig. 4. Die auf diese Weise hergestellte größere Anzahl von elektrisch leitenden Schichten in Durchgangsrichtung bedingt eine geringere Schichtstärke der elektrisch leitenden Materialien. Die Beschichtung der Oberflächen eines solchen Steins kann bei dieser oder einer ähnlichen Anordnung der Schichten im Stein auch entfallen. Zweckmäßig ist jedoch, die Beschichtung auf den Oberflächen, die in Stromdurchgangsrichtung aneinander angrenzen, zu belassen.

Im Falle, daß zwischen dem feuerfesten Material und der jeweils angrenzenden elektrisch leitenden Schicht eine inerte Zwischenschicht angeordnet wird, kann das Material in dieser Schicht in vorteilhafter Weise so ausgewählt werden, daß thermische Spannungen zwischen dem feuerfesten Material und der elektrisch leitenden Schicht abgebaut werden. Zum gleichen Zweck können jedoch auch dem feuerfesten Material geeignete Zusätze zugegeben oder dessen Porosität zur Erzielung eines angepaßten thermischen Ausdehnungskoeffizienten eingestellt werden.

Ein Ausführungsbeispiel der Herstellung eines feuerfesten Steines, der mit Schichten von Graphit als elektrisch leitendem Material versehen ist, wird wie folgt wiedergegeben:

In einer Preßform wird eine aus Graphit mit Zusätzen von Anthrazit und Pechkoks sowie einem Bindemittel bestehende Masse zusammen mit einem Stein-Rohling so eingebracht, daß nach dem Pressen die Oberfläche des Rohlings beschichtet ist. Danach wird der Stein unter Luftabschluß bzw. in stark reduzierender Atmosphäre gebrannt. Die Temperatur wird, um Spannungen im Material zu verhindern, sehr langsam (etwa 2 bis 4 °C/h) bis zu einer Brenn-Endtemperatur von etwa 1350 °C erhöht. Nach dem Brennen, bei welchem der Binder verkokt, weist der Stein auf seiner Oberfläche eine stabile elektrisch leitende Schicht der gewünschten Stärke auf. Wenn ein solcher Stein innen liegende elektrisch leitende Schichten aufweisen soll, wird dies bei der Herstellung der Rohlinge vor dem Pressen berücksichtigt. Die Brennbehandlung ändert sich dadurch nicht. Der Querschnitt eines solchen Steines ist z.B. rechteckig mit den Kantenlängen 100 mm x 120 mm, seine Höhe beträgt 250 mm. Zur Anpassung an die Bodenwölbung des Ofens verjüngt sich der Stein in seiner Längserstreckung in bekannter Weise.

Bei Einsatz von Metallkarbiden, insbesondere Titankarbiden als Material für die elektrisch leitenden Schichten können noch wesentlich geringere Schichtstärken erzielt werden. Beispielsweise wird auf einen vergüteten kohlenstoffhaltigen Magnesitstein mit einem Pechzusatz von etwa 5 %, Titankarbid mit einer Schichtstärke von 40 »m aufgebracht. Bei Verwendung von Chrommagnesitsteinen ist es erforderlich, eine Zwischenschicht einzusetzen, die einen isolierenden Aluminiumoxidzusatz enthält. Diese Schicht ist etwa 0,2 mm dick und enthält kein Chromit. Ihr Aluminiumoxid-Anteil nimmt zur Titankarbid-Schicht hin zu.

Besonders dünne Titankarbid-Schichten können durch Aufdampfen auf die Oberflächen des feuerfesten Materials gewonnen werden. Dabei wird bei einer Temperatur von 800 bis 1200 °C Titan-Chlorid und Methan auf die Oberfläche des Rohlings, die ggf. bereits eine inerte Zwischenschicht trägt, geleitet.

Fig. 5 veranschaulicht, wie die auf die einzelnen Partikel 6 des feuerfesten Materials aufgebrachten Schichten 7, von denen die Partikel 6 somit überzogen sind, ein zusammenhängendes Netzwerk bilden. An den Kontaktflächen der Partikel liegen auch die elektrisch leitenden Schichten aufeinander und bilden somit eine Kette zusammenhängender Leiter. Die Schichtdicke beträgt bei einem Gesamtwiderstand des Bodens von etwa 0,15 x 10⁻³ Ohm etwa zwischen 0,1 bis 1 »m, wenn die mittlere Korngröße des feuerfesten Materials etwa zwischen 0,1 und 5 mm liegt.

## Patentansprüche

1. Boden eines elektrisch beheizten Schmelzofens, insbesondere eines Gleichstromofens, der mit als Elektrode dienenden Schichten aus elektrisch leitendem Material versehen ist, die sich in einer Zustellung aus feuerfestem Material von der Boden-Innenoberfläche ausgehend zur Schmelze hin erstrecken,
dadurch gekennzeichnet,
daß die Schichten aus mindestens einem hochschmelzenden nichtmetallischen elektrisch leitendem Material bestehen, mit dem feuerfesten Material verbunden sind und letzteres eine Stärke von höchstens 5 mm aufweist.

2. Boden nach Anspruch 1,
dadurch gekennzeichnet,
daß die Beschichtung des elektrisch leitenden Materials eine Stärke von höchstens 2 mm aufweist.

3. Boden nach Anspruch 1 oder 2,
dadurch gekennzeichnet,
daß die Beschichtung des elektrisch leitenden Materials aus kohlenstoffhaltigem Material besteht.

4. Boden nach Anspruch 3,
dadurch gekennzeichnet,
daß das Beschichtungsmaterial Graphit ist.

5. Boden nach Anspruch 3,
dadurch gekennzeichnet,
daß das Beschichtungsmaterial ein Metallkarbid ist.

6. Boden nach Anspruch 5,
dadurch gekennzeichnet,
daß das Beschichtungsmaterial Titankarbid ist.

7. Boden nach Anspruch 6,
dadurch gekennzeichnet,
daß die Beschichtung des elektrisch leitenden Materials auf die Partikel des feuerfesten Materials vor der Formgebung als Zustellung aufgebracht ist.

8. Boden nach einem der vorhergehenden Ansprüche,
dadurch gekennzeichnet,
daß dessen feuerfeste Zustellung aus Steinen zusammengesetzt ist und die Beschichtung des elektrisch leitenden Materials als Bestandteil mit den Steinen gegebenenfalls unter Zwischenschaltung einer inerten Zwischenschicht verbunden ist.

9. Boden nach Anspruch 8,
dadurch gekennzeichnet,
daß zumindest ein Teil der Oberflächen der Steine, vorzugsweise der quer zur Erstreckung des Bodens verlaufenden Oberflächen, mit der Beschichtung des elektrisch leitenden Materials versehen ist.

10. Boden nach Anspruch 9,
dadurch gekennzeichnet,
daß die Beschichtung des elektrisch leitenden Materials unter Verwendung eines geeigneten Bindemittels mit den Steinen verbunden ist.

11. Boden nach einem der Ansprüche 8 bis 10,
dadurch gekennzeichnet,
daß die Beschichtung des elektrisch leitenden Materials einbeziehungsweise aufgepreßt und durch anschließende Wärmebehandlung verfestigt ist.

## Claims

1. A bottom of an electrically heated melting furnace, in particular of a direct-current furnace, which is provided with layers of electrically conductive material serving as electrode, which extend in a lining made of refractory material starting from the inner surface of the bottom towards the melt, characterised in that the layers consist of at least one high-melting non-metallic electrically conductive material, they are connected to the refractory material and the latter has a thickness of 5 mm at the most.

2. A bottom according to claim 1, characterised in that the coating of the electrically conductive material has a thickness of 2 mm at the most.

3. A bottom according to claim 1 or 2, characterised in that the coating of the electrically conductive material consists of carbonaceous material.

4. A bottom according to claim 3, characterised in that the costing material is graphite.

5. A bottom according to claim 3, characterised in that the coating material is a metal carbide.

6. A bottom according to claim 5, characterised in that the coating material is titanium carbide.

7. A bottom according to claim 6, characterised in that the coating of the electrically conductive material is applied to the particles of the refractory material prior to the shaping as lining.

8. A bottom according to any one of the preceding claims, characterised in that the refractory lining thereof is composed of bricks and the coating of the electrically conductive material is connected as a constituent part to the bricks possibly along with the interpolation of an inert intermediate layer.

9. A bottom according to claim 8, characterised in that at least part of the surfaces of the bricks, preferably of the surfaces extending transversely to the extent of the bottom, is provided with the coating of the electrically conductive material.

10. A bottom according to claim 9, characterised in that the coating of the electrically conductive material is connected to the stones using a suitable binding agent.

11. A bottom according to any one of claims 8 to 10, characterised in that the coating of the electrically conductive material is pressed in or respectively on and is hardened by subsequent heat treatment.

## Revendications

1. Fond d'un four de fusion chauffé électriquement, en particulier d'un four à courant continu, qui est muni de couches servant d'électrode en une matière électriquement conductrice, qui s'étendent, dans un garnissage de matière réfractaire, à partir de la surface interne du fond vers le bain de fusion,
caractérisé en ce que les couches sont constituées d'au moins une matière électriquement conductrice non métallique à point de fusion élevé, sont reliées à la matière réfractaire, et cette dernière présente une épaisseur d'au plus 5 mm.

2. Fond selon la revendication 1,
caractérisé en ce que le revêtement de la matière électriquement conductrice présente une épaisseur d'au plus 2 mm.

3. Fond selon la revendication 1 ou 2,
caractérisé en ce que le revêtement de la matière électriquement conductrice est constitué d'une matière contenant du carbone.

4. Fond selon la revendication 3,
caractérisé en ce que la matière du revêtement est du graphite.

5. Fond selon la revendication 3,
caractérisé en ce que la matière du revêtement est un carbure métallique.

6. Fond selon la revendication 5,
caractérisé en ce que la matière du revêtement est du carbure de titane.

7. Fond selon la revendication 6,
caractérisé en ce que le revêtement de la matière électriquement conductrice est appliqué sur les particules de la matière réfractaire, avant le façonnage, comme garnissage.

8. Fond selon une des revendications précédentes,
caractérisé en ce que son garnissage réfractaire est constitué de briques, et le revêtement de la matière électriquement conductrice est relié, comme partie constitutive, aux briques, le cas échéant en interposant une couche intermédiaire inerte.

9. Fond selon la revendication 8,
caractérisé en ce qu'au moins une partie des surfaces des briques, de préférence des surfaces s'étendant transversalement à l'extension du fond, est munie du revêtement de la matière électriquement conductrice.

10. Fond selon la revendication 9,
caractérisé en ce que le revêtement de la matière électriquement conductrice est relié aux briques en utilisant un adhésif ou liant approprié.

11. Fond selon une des revendications 8 à 10,
caractérisé en ce que le revêtement de la matière électriquement conductrice est injecté ou pressé, et compacté par traitement thermique ultérieur.
